Europäisches Patentamt

European Patent Office

Office européen des brevets

(19)

(11) Veröffentlichungsnummer: **0 114 596**
**B1**

(12) **EUROPÄISCHE PATENTSCHRIFT**

(45) Veröffentlichungstag der Patentschrift: 17.05.89

(21) Anmeldenummer: 84100016.9

(22) Anmeldetag: 02.01.84

(51) Int. Cl.⁴: **G 01 N 29/04,** G 10 K 11/34 // A61B10/00

(54) Ultraschallabbildungssystem.

(30) Priorität: 21.01.83 DE 3301967

(43) Veröffentlichungstag der Anmeldung:
01.08.84 Patentblatt 84/31

(45) Bekanntmachung des Hinweises auf die
Patenterteilung:
17.05.89 Patentblatt 89/20

(84) Benannte Vertragsstaaten:
BE CH DE FR GB IT LI SE

(56) Entgegenhaltungen:
DE-A-2 912 410
FR-A-2 450 596
US-A-3 675 472
US-A-4 127 034
US-A-4 325 257

(73) Patentinhaber: Siemens Aktiengesellschaft
Berlin und München
Wittelsbacherplatz 2
D-8000 München 2 (DE)

(72) Erfinder: Lerch, Reinhard, Dr.
Lachnerstrasse 57
D-8520 Erlangen (DE)

Courier Press, Leamington Spa, England.

**Beschreibung**

Die Erfindung bezieht sich auf ein Ultraschallabbildungssystem mit einem linearen Array aus mehreren Wandlerelementen, von denen jeweils eine Gruppe von n bzw. n+1 gemeinsam gesteuerten Wandlerelementen eine Strahlapertur bilden und denen ein Sendesystem und ein Empfangssystem zugeordnet sind, die jeweils mit einer elektronischen Fokussierung des Schallfeldes durch Phasenverzögerung und mit Parallelscan des Schallfeldes durch elektronische Fortschaltung versehen sind.

In der zerstörungsfreien Werkstoffprüfung mit Ultraschall erden zur Fehlervermessung wegen des verbesserten Auflösungsvermögens im zunehmenden Maße fokussierende Schwinger eingesetzt, wobei für unterschiedliche Fehlertiefen verschiedene Prüfköpfe mit entsprechenden Brennweiten erforderlich sind. Hier bringt ein Array-Prüfkopf durch die Möglichkeit der elektronischen Fokussierung auf verschiedene Werkstofftiefenbereiche eine wesentliche Ersparnis an Prüfzeit und Kosten.

Die auf der Technik der Strahlergruppen basierenden Systeme lassen sich grob in drei Gruppen unterteilen, nämlich die Bildwandler, die Echtzeit- oder Realtime-Scanner und phasengesteuerte Gruppenstrahler oder Phased-Arrays.

Birdwandler sind Systeme, bei denen ein durchschalltes Objekts mittels einer akustischen Linse auf ein Linien- oder Flächenarray abgebildet wird. Die über der Array-ebene herrschende stationäre Schalldurchverteilung wird abgefragt, indem ein Element nach dem anderen durchgetaktet wird. Da Auflösungsvermögen und Gesichtsfeld von Elementengröße und Anzahl abhängen, ist die Zahl der Einzelelemente bei Bildwandlern verhältnismäßig groß, beispielsweise mehrere 1000. Das Systeme akustische Linse-Bildwandler registriert also die stationäre Schalldurchverteilung in einer zur Arrayfläche parallelen Objektebene.

Der Realtime-Scanner arbeitet hingegen in Puls-Echo-Betrieb. Der Prüfkopf ist ein lineares Array, dessen Elemente einzelnen oder in Gruppen nacheinander durchgetaktet werden. Aus Echohöhe und Laufzeit wird auf einem helligkeitsgesteuerten Oszilloskop, ein B-Bild aufgebaut, dessen Breite durch die Array-Länge gegeben ist.

Beim Phased-Array, dessen Prüfkopf gegenüber dem des Realtime-Scanner im allgemeinen eine geringere Elementenzahl hat, tragen alle Einzelschwinger zum Aufbau und zur Steuerung bei. Aufgrund der Möglichkeit der Strahlschwenkung erhält man mit der Phased-Array-Technik trotz geringer Prüfkopflänge ein verhältnismäßig großes sektorförmiges B-Bild.

Es ist ein Ultraschallabbildungssystem für Untersuchungen an Reaktordruckbehältern als phasengesteuertes Puls-Echo-System bekannt, das neben A-, B- und C-Scan die Möglichkeit von holographischen Untersuchungen bietet. Das gesamte System wird durch einen PDP 11/34 Computer gesteuert. Zur schnellen Fehlersuche und -lokalisation dient der Puls-Echo-Betrieb. Die akustische Holographie liefert dann genauere Information über fehlerverdächtige Gebiete. Der Prüfkopf enthält ein lineares Array aus 120 Sende- und 120 Empfangselementen, die in zwei Reihen nebeneinander angeordnet sind. Das System arbeitet bei einer Ultraschallfrequenz von 2,3 MHz und der Elementenabstand beträgt λ/2 für Dichtewellen und λ für Schubwellen. Jedes Element hat einen eigenen Impulsgenerator. Diesen Sende- und Empfangselementen ist ein Sendesystem und ein Empfangssystem zugeordnet. Beim Puls-Echo-Betrieb werden im Sendefall von den 120 Elementen immer 16 Elemente zusammengeschaltet, im Empfangsfall arbeiten von dieser Gruppe nur 8 Elemente. Im Sendefall besteht die Strahlapertur aus 16 Elemente, die mittels eines Koppelfeldes auf die 120 Sendeelemente fortgeschaltet werden. Die Empfangssignale werden über ein Koppelfeld geleitet, vorverstärkt, analog digital gewandelt, mittels eines Schieberegisters geeignet verzögert und wird in analoge Signale zurückgewandelt. Die Prüfgeschwindigkeit von schweißnähten beträgt dabei bis zu 1/2 m²/min (wie Gebhard: "Grundlagen, Technik und Anwendung in der Werkstoffprüfung", IzfP-Bericht Nr. 770117-DW, Seiten 60 bis 65, Saarbrücken 1977).

Bei diesem bekannten Ultraschallabbildungssystem wird die Ansteuerung des Arrays mit Hilfe eines Koppelfeldes gelöst. Es erscheint jedoch nicht möglich, ein aus mehreren 1000 Koppelfeldpunkten bestehendes Koppelfeld aufzubauen, das bei hohen Ultraschallfrequenzen noch einwandfrei arbeitet.

Aus der US-Patentschrift 4 127 034 ist eine Ultraschallabbildungdvorrichtung mit einem linearen Array aus mehreren Wandlerelementen bekannt, bei der jedem Wandlerelement jeweils nur ein Schalter zugeordnet ist, der sowohl für den Sende- als auch für den Empfangsfall dient. Bei dieser Vorrichtung ist jedoch nur für den Empfangsfall eine dynamische Fokussierung mittels variabler Verzögerungseinrichtungen vorgesehen. Eine elektronische Fokussierung des gesendeten Schallfeldes kann mit dieser Vorrichtung nicht durchgeführt werden.

Der Erfindung liegt nun die Aufgabe zugrunde, ein Ultraschallabbildungssystem für hohe Ultraschallfrequenzen, insbesondere wenigstens etwa 30 MHz, anzugeben, bei dem das Sende- und Empfangssystem digital aufgebaut ist. Zugleich soll das Ultraschallabbildungssystem bei dieser Ultraschallfrequenz eine Ultraschall-C-Bild-Darstellung frei strukturierter Objekte ermöglichen und es soll geeignet sein für die Anwendung in der Medizin, vorzugsweise der Diagnostik von Hauterkrankungen, inssondere der Diagnose am offenen Herzen. Es soll ferner geeignet sein zur Anwendung in der zerstörungsfreien Werkstoffprüfung, vorzugsweise in der Fehlerortung dünner gelöteter und geklebter Schichten, insbesondere zur Schichtdickenbestimmung in Mehrschichtsystemen. Außerdem soll der hardwaremäßige Aufwand gering gehalten werden.

Diese Aufgabe wird erfindungsgemäß gelöst mit den kennzeichnenden Merkmalen des Anspruchs 1. Dadurch, daß für jedes Wandlerelement der Strahlapertur jeweils eine Verzögerungszeit digital eingestellt und mit Hilfe eines Startimpulses getriggert wird und daß die Echosignale der Wandlerelemente der Strahlapertur im Rechner phasenverzögert addiert werden, wird erreicht, daß man ein Ultraschallabbildungssystem für hohe Ultraschallfrequenzen, insbesondere wenigstens etwa 30 MHz, mit geringem hardwaremäßigen Aufwand für das Empfangssystem aufbauen kann. Bei diesem im Puls-Echo-Betrieb arbeitenden Ultraschallabbildungssystem, das aus mehreren linear angeordneten Wandlerelementen, vorzugsweise mehreren 100 Wandlerelementen, besteht, erfolgt die Ansteuerung zwecks Fokussierung phasenverzögert. Es wird somit auf elektronischem Wege eine Ultraschallinse gebildet. Die Strahlapertur, die beispielsweise aus mehreren vorzugsweise aus etwa 15, insbesondere aus etwa 30, linear angeordneten Wandlerelementen besteht, wird elektronisch fortgeschaltet, beispielsweise gemäß einer Gruppenfortschaltung, vorzugsweise gemäß einem Halbschrittverfahren und insbesondere gemäß einem modifizierten Halbschrittverfahren.

Durch diese Maßnahmen können die Funktionen von mehreren technisch eingesetzten Einzelprüfköpfen in einem einzigen Prüfkopf verbunden werden, indem man durch Änderung der Software Sende- und Empfangslinse unabhängig voneinander im Rechner formieren kann, während die Hardware unverändert bleibt. Außerdem hat die digitale Ausführungsform des Empfangssystem den Vorteil, daß die Fokustiefe leicht geändert werden kann, sogar während eines Scanvorganges, so daß auch gekrümmte Flächen abgebildet werden können. Mit diesem Ultraschallabbildungssystem können ferner Kontaktierungsprobleme bei Löt- und Klebeschichten zwischen Kühlkörpern und IC-Gehäusen gelöst werden. Es hat eine hohe Auflösung, beispielsweise eine laterale Auflösung von etwa 150 μm. Neben diesen Anwendungen in der Werkstoffprüftecnik eignet sich das Ultraschallabbildungssystem in der Medizin beispielsweise zur Diagnose der Sehnervdegeneration beim grünen Star, wobei eine Ultraschallfrequenz von etwa 15 MHz eingestellt wird. Weitere Anwendungen liegen in der Hautdiagnose und in der Herz- und Nierendiagnose am geöffneten Patienten zur Lokalisierung einer Stenose bzw. eines Nierensteins. Hierzu wird zweckmäßig eine höhere Ultraschallfrequenz, vorzugsweise wenigstens etwa 30 MHz angewandt. Außerdem liefert das Gerät neben der C-Bild-Darstellung das in der Medizin übliche Ultraschall-B-Bild.

Zur weiteren Erläuterung wird auf die Zeichnung Bezug genommen, in der ein Ausführungsbeispiel einer Vorrichtung nach der Erfindung schematisch veranschaulicht ist.

Figur 1 zeigt ein Blockschaltbild des Ultraschallabbildungssystems und in

Figur 2 ist eine vorteilhafte Sende- und Empfangsgabelschaltung veranschaulicht.

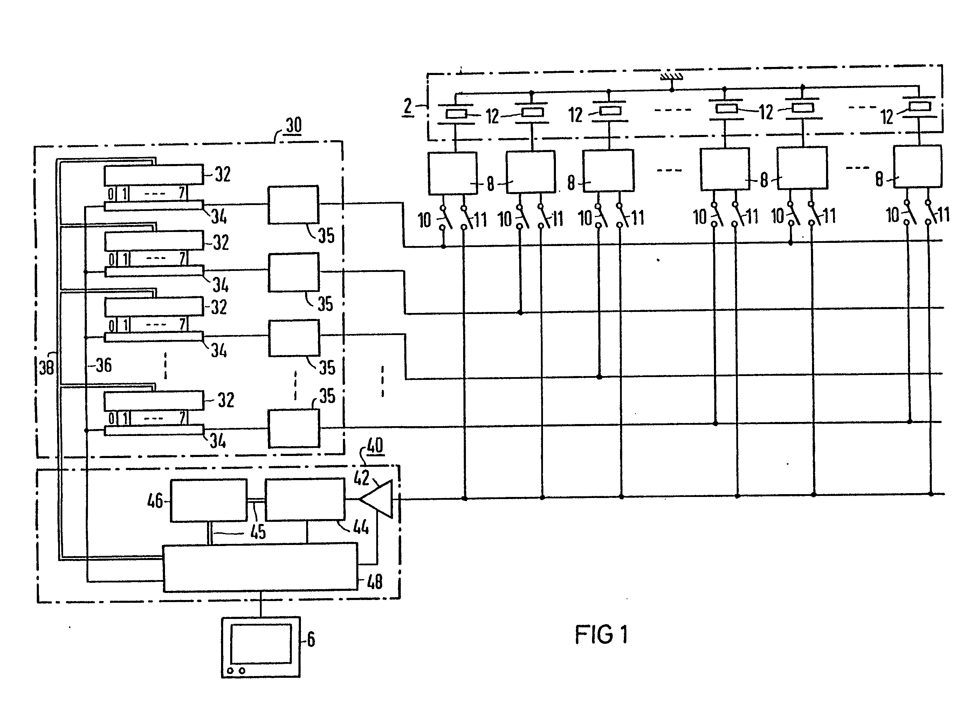

In der Figur 1 ist ein Blockschaltbild eines Ultraschallabbildungssystems dargestellt, das aus einem linearen Array 2, einem Sendesystem 30, einem Empfangssystem 40, einem Sichtschirm 6 und aus mehreren Sende- und Empfangsgabelschaltungen 8, beispielsweise 300, besteht. Außerdem ist den Sende- und Empfangsgabelschaltungen 8 jeweils ein Senderschalter 10 und ein Empfängerschalter 11 zugeordnet. Das lineare Array 2 enthält mehrere Wandlerelemente 12, vorzugsweise 300, die beispielsweise aus Bleimetaniobat $Pb(NO_3)$, vorzugsweise aus Bleizirkonat-Titanat PZT, bestehen können. Die Ultraschallfrequenz dieser Wandlerelemente 12 beträgt vorzugsweise wenigstens etwa 30 MHz. Bei diesem im Impuls-Echo-Betrieb arbeitenden Ultraschallabbildungssystem ist von den Wandlerelementen 12 jeweils nur eine Gruppe von n Wandlerelementen, vorzugsweise 15, insbesondere 30 Wandlerelemente 12 gleichzeitig aktiv. Diese n aktiven Wandlerelemente 12 bilden jeweils die Strahlapertur, die beispielsweise gemäß der Gruppenfortschaltung, vorzugsweise gemäß dem Halbschrittverfahren und insbesondere gemäß einem modifizierten Halbschrittverfahren, elektronisch fortgeschaltet wird. Die Ansteuerung zwecks Fokussierung erfolgt phasenverzögert. Das Rastermaß des aus beispielsweise 300 Wandlerelementen 12 bestehenden linearen Arrays 2 ist beispielsweise 150 μm, wobei die eigenliche Schwingerbreite, die gleich ist dem Rastermaß minus der Schnittbreite, etwa 100 μm beträgt. Die Gesamtlänge des Arrays 2 beläuft sich somit auf 45 mm. Die Länge der Schwinger beträgt beispielsweise 5,5 mm, während sich ihre Dicke aus der Resonanzbedingung ergibt. Bei Bleimetaniobat $Pb(NO_3)$ beträgt die Dicke der Wandlerelemente beispielsweise etwa 55 μm und bei Blei-Zirkonat-Titanat PZT beträgt die Dicke beispielsweise etwa 67 μm.

Das Sendesystem 30 besteht aus mehreren Zwischenspeichern 32, mehreren digital programmierbaren Verzögerungsleitungen 34 und mehreren Sendeverstärkern 35. Ein Zwischenspeicher 32, eine digital programmierbare Verzögerung 34 und ein Sendeverstärker 35 ist jeweils einem der n aktiven Wandlerelemente 12 der Strahlapertur zugeordnet, wenn die elektronische Fortschaltung des Schallfeldes gemäß der Gruppenfortschaltung erfolgt. Die Strahlapertur wird beispielsweise aus 30 Wandlerelementen 12 gebildet.

Wenn die elektronische Fortschaltung des Schallfeldes gemäß dem Halbschrittverfahren oder gemäß dem modizifierten Halbschrittverfahren erfolgt, so wird das Sendesystem 30 um einen Kanal, d.h. um einen Zwischenspeicher 32, eine digital programmierbare Verzögerungsleitung 34 und einen Sendeverstärker 35 erweitert. Damit besteht die Strahlapertur abwechselnd aus n oder n+1 aktiven Wandlerelemente 12. Die Ansteuerung der Sendeverstärker 35 erfolgt über Rechteckimpulse, die von einem Taktgenerator eines Rechners 48 mit Hilfe einer Sendetriggerleitung 36 geliefert werden. Diese Rechteckimpulse werden mit Hilfe der programmierbaren Verzögerungsleitung 34 verzögert. Die Verzögerungszeiten sind jeweils in digitaler Form in den Zwischenspeichern 32 abgespeichert. In jedem dieser Zwichenspeicher 32 werden die Verzögerungszeiten, die mit Hilfe des Rechners 48 bestimmt und über einen Datenbus 38 ausgegeben werden, zeitlich zwischengespeichert.

Das Empfangssystem 40 besteht aus einem Breitbandverstärker 42, einem Analog-Digital-Wandler 44, einem Puffer-Speicher 46 und aus einem Rechner 48. Unter Umständen kann es vorteilhaft sein, daß das Empfangssystem 40 mit beispielsweise n Breitbandverstärkern 42, beispielsweise n 8-Bit-Analog-Digital-Wandler 44 und beispielsweise n Puffer-Speichern 46 versehen ist. Der Puffer-Speicher 46 ist jeweils mit Hilfe eines Datenbusses 45 mit dem 8-bit-Analog-Digital-Wandler 44 und dem Rechner 48 verbunden.

Im Empfangsfall startet der Rechner 48 nach einer Totzeit die Analog-Digital-Wandlung des Echosignals, das vom ersten Wandlerelement 12 der aktiven Linse geliefert wird. Nach Übernahme des digitalisierten Echosignals in der Rechner-Speicher wird vom gleichen Ort der Linse ein erneuter Sendeimpuls vom Sendesystem 30 in ein Objekt abgegeben. Diesmal wird das Echosignal des zweiten Wandlerelementes 12 digital aufgezeichnet. Nachdem man auf diese Weise alle Wandlerelemente 12 der aktiven Linse abgetastet hat, ist der Rechner in der Lage, die digitalen Signale phasenverzögert zu addieren, um so einen synthetischen Empfangsfokus zu bilden. Da die Signale phasenrichtig zu addieren sind, muß man bei der Abtastung das λ-8-Kriterium beachten. Somit benötigt man einen Analog-Digital-Wandler 44 mit einer Wandlungsrate von beispielsweise 200 MHz bei einer Auflösung von 8-bit, wenn man eine Ultraschallfrequenz von beispielsweise 25 MHz realisieren möchte Außerdem benötigt man einen schnellen Puffer-Speicher 46 auch mit einer Taktrate von 200 MHz, weil die digitalen Abtastwerte auch mit einer Taktrate von 200 MHz aus dem Analog-Digital-Wandler 44 ausgelesen und mit dieser Taktrate in den Puffer-Speicher 46 eingelesen werden. Der Puffer-Speicher 46 hat die Aufgabe, den schnellen Analog-Digital-Wandler 44 an den Rechner 48 anzupassen, der mit einer weit geringeren Taktfrequenz arbeitet. Werden Ultraschallfrequenzen empfangen, die oberhalb von 25 MHz liegen, wird wegen der Reproduzierbarkeit der Echosignale die Sendelinsenposition festgehalten und das Echosignal zeitverschoben, in zwei oder mehreren aufeinanderfolgenden Durchgängen abgetastet, um so scheinbar mit Hilfe von m Schüssen aus der gleichen Position die maximale m-fache Abtastrate zu erzielen.

Im Falle von m zeitverschobenen Abtastungen eines Echosignals werden insgesamt

$$a \cdot m \cdot n \cdot (Z-n)$$

wobei

a = Verfahrenskoeffizient
m = Anzahl der Schüsse
n = Anzahl der Wandlerelemente der Strahlapertur

Z = Anzahl der Wandlerelemente des Arrays.

Schüsse benötigt um eine Arrayzeile abzutasten. Werden jedoch n Analog-Digital-Wandler 44 und dementsprechend n Puffer-Speicher 46 und n Breitbandverstärker 42 vorgesehen, so reduziert sich der Zeitverlustfaktor m · n auf m. Im allgemeinen reichen zwei Schüsse aus.

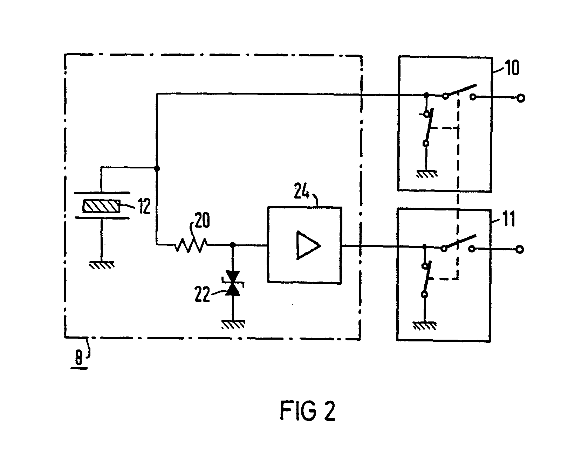

Die Figur 2 zeigt eine vorteilhafte Sende- und Empfangsgabelschaltung 8 mit einem Senderschalter 10 und einem Empfängerschalter 11. Diese Sende- und Empfangsgabelschaltung 8 soll Sende- und Empfangssignale jeweils der Wandlerelemente 12 trennen. Im Sendefall ist der Senderschalter 10 direkt am Wandlerelement 12 angeordnet und im Emfangsfall sind zwischen dem Empfängerschalter 11 und dem Wandlerelement 12, ein Widerstand 20, eine sogenannte bidirektionale Transienten-Absorptions-Zenerdiode 22 und eim Empfangsverstärker 24. Die bidirektionale Transienten-Absorptions-Zenerdiode 22 mit niedriger Schwellspannung dient als Schutz des Empfängereingangs. Der Widerstand 20 bestimmt den Strom durch die bidirektionale Transienten-Absoprtions-Zenerdiode 22.

Da diese Sende- und Empfangsgabelschaltung 8 keinen geschlossenen Kreis bildet, wird somit die Schwingneigung vermieden. Die Schalter 10 und 11 sind jeweils als Doppelschalter ausgeführt, wegen der damit erzielbaren Sperrdämpfung. Die Schaltknackse des Senderschalters 10 werden annähernd vermieden, wenn man als Schalter 10 PIN-Dioden verwendet. Im Empfangsfall werden als Empfängerschalter 11 ein CMOS-Schalter verwendet wegen seiner leichten Ansteuerbarkeit mit TTL-Pegel und der hohen Sperrdämpfung.

Der große Vorteil dieser rein digital aufgebauten Vorrichtung liegt in seiner Flexibilität, denn man kann per Software Sende- und Empfangslinse unabhängig voneinander im Rechner 48 formieren, während die Hardware unverändert bleibt. Die Größe der Strahlapertur beeinflußt nur die Rechenzeit. Man ist so in der Lage, das Gerät relativ schnell den jeweiligen Erfordernissen anzupassen. Außerdem erspart man sich in diesem Fall den Aufbau eines aufwendigen Verzögerungsmoduls, so daß der hardwaremäßige Aufwand bei dieser Gestaltung des Ultraschallabbildungssystems minimal gehalten wird. Ein weiterer Vorteil dieser digitalen Realisierung ist, daß die Fokustiefe leicht geändert werden kann, sogar während eines Scanvorganges. Somit ist man in der Lage auch gekrümmte Flächen abzubilden.

**Patentansprüche**

1. Ultraschallabbildungssystem mit einem linearen Array (2) aus mehreren Wandlerelemente (12), von denen jeweils eine Gruppe von n bzw. n+1 gemeinsam gesteuerten Wandlerelementen (12) eine Strahlapertur bildet und denen ein Sendesystem (30), das mit einer elektronischen Fokussierung des Schallfeldes und mit Parallelscan des Schallfeldes durch elektronische Fortschaltung versehen ist und ein Empfangssystem (40) mit einem Analog-Digital-Wandler (44) zugeordnet sind, gekennzeichnet durch folgende Merkmale

a) im Sendesystem (30) ist für die Wandlerelemente (12) der Strahlapertur jeweils eine digital programmierbare Verzögerungsleitung (34), ein Zwischenspeicher (32) und ein Sendeverstärker (35) vorgesehen,

b) das Empfangssystem (40) enthält einen Puffer-Speicher (46) und einen Rechner (48),

c) die Wandlerelemente (12) des linearen Arrays (2) sind jeweils über einen Senderschalter (10) mit dem Sendesystem (30) und jeweils über einen Empfängerschalter (11) mit dem Empfangssystem (40) verbunden, wobei das System für hohe Ultraschallfrequenzen geeignet ist.

2. Ultraschallabbildungssystem nach Anspruch 1, dadurch gekennzeichnet, daß das Empfangssystem (40) n 8-bit-Analog-Digital-Wandler (44), n Puffer-Speicher (46) und n Breitbandverstärker (42) enthält.

3. Ultraschallabbildungssystem nach Anspruch 1, dadurch gekennzeichnet, daß der Rechner (48) mit Hilfe eines Datenbus (38) mit den jeweiligen Zwischenspeichern (32) verbunden ist.

4. Ultraschallabbildungssystem nach Anspruch 1, dadurch gekennzeichnet, daß der Rechner (48) mit Hilfe einer Sendetriggerleitung (36) mit den programmierbaren Verzögerungsleitungen (34) verbunden ist.

5. Ultraschallabbildungssystem nach Anspruch 1, dadurch gekennzeichnet, daß dem Analog-Digital-Wandler (44) ein Breitbandverstärker (42) vorgeschaltet ist.

6. Ultraschallabbildungssystem nach Anspruch 1, dadurch gekennzeichnet, daß als Puffer-Speicher (46) ein Speicher mit einer Taktrate von mindestens 200 MHz vorgesehen ist.

7. Ultraschallabbildungssystem nach Anspruch 1, dadurch gekennzeichnet, daß der Puffer-Speicher (46) jeweils über einen Datenbus (45) mit dem 8-bit-Analog-Digital-Wandler (44) und dem Rechner (48) verbunden ist.

8. Ultraschallabbildungssystem nach Anspruch 1, dadurch gekennzeichnet, daß als Senderschalter (10) PIN-Dioden vorgesehen sind.

9. Ultraschallabbildungssystem nach Anspruch 1, dadurch gekennzeichnet, daß als Empfängerschalter (11) CMOS-Analog-Schalter vorgesehen sind.

10.     Ultraschallabbildungssystem     nach Anspruch 1, dadurch gekennzeichnet, daß es nach folgendem Betriebsverfahren arbeitet: Im Sendesystem (30) werden mit Hilfe der programmierbaren Verzögerungsleitungen (34) Rechteckimpulse verzögert, deren Verzögerungszeiten in digitaler Form in dem Zwischenspeicher (32) zeitlich zwischengespeichert werden.

**Revendications**

1. Système d'imagerie ultrasonore comprenant une disposition linéaire ou barrette (2) d'éléments transducteurs (12), parmi lesquels un groupe de n ou n+1 éléments transducteurs (12) commandés collectivement forme une ouverture rayonnante et auxquels sont coordonnés un système d'émission (30) lequel est pourvu d'une focalisation électronique du champ ultrasonore et d'un balayage parallèle du champ ultrasonore par avancement du groupe d'éléments par commutation électronique, ainsi qu'un système de réception (40) comportant un convertisseur analogique-numérique (44), caractérisé en ce que

a) le système d'émission (30) comporte une ligne de retard (34) programmable numériquement, une mémoire intermédiare (32) et un amplificateur d'émission (35) pour les éléments transducteurs (12) de l'ouverture rayonnante,

b) le système de réception (40) comporte une mémoire tampon (46) et un ordinateur (48) et

c) les éléments transducteurs (12) de la barrette (2) sont reliés chacun à travers un interrupteur d'émission (10) au système d'émission (30) et à travers un interrupteur de réception (11) au système de réception (40), l'ensemble du système d'imagerie convenant pour des fréquences ultrasonores élevées.

2. Système selon la revendication 1, caractérisé en ce que le système de réception (40) comporte n convertisseurs analogique-numérique (44) à 8 bits, n mémoires tampons (46) et n amplificateurs à large bande (42).

3. Système selon la revendication 1, caractérisé en ce que l'ordinateur (48) est relié à chacune des mémoires intermédiaires (32) à l'aide d'un bus de données (38).

4. Système selon la revendication 1, caractérisé en ce que l'ordinateur (48) est relié aux lignes de retard programmables (34) à l'aide d'une ligne de déclenchement d'émission (36).

5. Système selon la revendication 1, caractérisé en ce que le convertisseur analogique-numérique (44) est précédé d'un amplificateur (42) à large bande.

6. Système selon la revendication 1, caractérisé en ce que la mémoire tampon (46) est constituée par une mémoire capable d'opérer à une fréquence d'horloge d'au moins 200 MHz.

7. Système selon la revendication 1, caractérisé en ce que chaque mémoire tampon (46) est reliée à travers un bus de données (45) au convertisseur analogique-numérique (44) à 8 bits et à l'ordinateur (48).

8. Système selon la revendication 1, caractérisé en ce que les interrupteurs d'émission (10) sont constitués par des diodes PIN.

9. Système selon la revendication 1, caractérisé en ce que les interrupteurs de réception (11) sont constitués par des interrupteurs analogique CMOS.

10. Système selon la revendication 1, caractérisé en ce qu'il travaille selon un procédé comprenant le retardement, dans le système d'émission (30), à l'aide des lignes de retard programmables (34), d'impulsions rectangulaires dont les temps de retard sont mémorisés temporairement sous forme numérique dans la mémoire intermédiaire (32).

## Claims

1. An ultrasonic imaging system having a linear array (2) comprising a plurality of transducer elements (12), of which in each case one group of n or n+1 jointly controlled transducer elements (12) forms a ray aperture and with which a transmitting system (30), which is provided with an electronic focusing of the sound field and with parallel scanning of the sound field, and a receiving system (40) having an analogue-digital converter (44) are associated, characterised by the following features

a) a digital programmable delay line (34), an intermediate store (32) and a transmitter amplifier (35) are provided in the transmitting system (30) in each case for the transducer elements (12) of the ray aperture,

b) the receiving system (40) comprises a buffer store (46) and a computer (48),

c) the transducer elements (12) of the linear array (2) are connected in each case via a transmitter switch (10) with the transmitting system (30) and in each case via a receiver switch (11) with the receiving system (40), the system being suitable for high ultrasonic frequencies.

2. An ultrasonic imaging system according to claim 1, characterised in that the receiving system (40) comprises n 8-bit-analogue-digital-converters (44), n buffer stores (46) and n wideband amplifiers (42).

3. An ultrasonic imaging system according to claim 1, characterised in that the computer (48) is connected by means of a data bus (38) to the respective intermediate store (32).

4. An ultrasonic imaging system according to claim 1, characterised in that the computer (48) is connected by means of a transmission trigger line (36) to the programmable delay line (34).

5. An ultrasonic imaging system according to claim 1, characterised in that a wideband amplifier (42) is connected in front of the analogue-digital-converter (44).

6. An ultrasonic imaging system according to claim 1, characterised in that a store having a clock rate of at least 200 MHz is provided as a buffer store.

7. An ultrasonic imaging system according to claim 1, characterised in that the buffer store (46) is connected in each case via a data bus (45) to the 8-bit-analogue-digital-converter (44) and the computer (48).

8. An ultrasonic imaging system according to claim 1, characterised in that PIN-diodes are provided as transmitter switches (10).

9. An ultrasonic imaging system according to claim 1, characterised in the CMOS-analogue-switches are provided as receiver switches (11).

10. An ultrasonic imaging system according to claim 1, characterised in that it operates according to the following operating procedure: square-wave impulses are delayed in the transmitting system (30) by means of the programmable delay line (34), the delay times of the impulses being temporarily stored in digital form in the intermediate store (32).

FIG 1

FIG 2